# EUROPEAN PATENT SPECIFICATION

(11) **EP 3 316 161 B1**
(45) Date of publication and mention of the grant of the patent: **27.01.2021**
(21) Application number: 17197086.6
(22) Date of filing: 18.10.2017
(51) Int. Cl.: G06F 21/31

(54) **AUTHENTICATION DEVICE, AUTHENTICATION METHOD, AND ELECTRONIC DEVICE THAT REDUCE PASSWORD PEEKING BY THIRD PERSON**
AUTHENTIFIZIERUNGSVORRICHTUNG, AUTHENTIFIZIERUNGSVERFAHREN UND ELEKTRONISCHE VORRICHTUNG ZUR REDUZIERUNG DES PASSWORTAUSSPÄHENS DURCH DRITTE
DISPOSITIF D'AUTHENTIFICATION, PROCÉDÉ D'AUTHENTIFICATION ET DISPOSITIF ÉLECTRONIQUE RÉDUISANT UNE VISUALISATION DE MOTS DE PASSE PAR UNE TIERCE PERSONNE

(30) Priority: 26.10.2016 JP 2016210090
(43) Date of publication of application: 02.05.2018
(73) Proprietor: Kyocera Document Solutions Inc., Osaka-shi, Osaka 540-8585 (JP)
(72) Inventor: Uenishi, Hiroyuki, Chuo-ku, Osaka 540-8585 (JP)
(74) Representative: Sommer, Andrea

(56) References cited:
- US-A1- 2013 055 366
- US-A1- 2015 278 492
- US-A1- 2016 294 804

## Description

### BACKGROUND

Unless otherwise indicated herein, the description in this section is not prior art to the claims in this application and is not admitted to be prior art by inclusion in this section.

For example, a typical electronic device like a portable terminal stores data, such as personal information which only a regular user should be permitted to access, and requires authentication with password. In the authentication with password, the user needs to enter a user name and a password to perform an authentication process. This case causes a risk that a third person could peek an entered password, and thus this is one of the problems when a fixed password, which has been registered, is used.

Considering this kind of problems, there is proposed a technique that randomly inserts dummy numerals "162" into a registered password number "0704" registered in an authentication server to generate a dummy input pattern (for example, "1**6*2*") of the password where the registered password number in "1076024" are replaced with asterisks "*" as hiding symbols so as to prevent the third person from peeking the password of the user. Meanwhile, there is also proposed a technique where around 10 pieces of passwords, which a target person remembers, are registered in a database, about three keywords are randomly selected from their keyword group, and then receives a password.
US 2016/0294804 A1 discloses an authentication device and method according to the preamble of the independent claims. According to said citation, the position at which a character is removed is always displayed.
US 2015/0278492 A1 discloses an authentication process, during which a device challenges the user by prompting the user to enter user authentication code according to randomly selected character positions. In each case the selected character positions are indicated on a screen.
US 2013/0055366 A1 discloses further background art concerning dynamically providing algorithm-based password/ challenge authentication.

### SUMMARY

It is the object of the present invention to provide an improved authentication device with enhanced security. The object is solved by the independent claims. Dependent claims are directed to advantageous embodiments. An authentication device according to one aspect of the disclosure includes a storage unit, an operation display, and an authentication unit. The storage unit stores a registered password for authentication associated with a user name. The operation display generates a password for temporary authentication in response to entering the user name. The password for temporary authentication is generated by removing a part of the registered password for authentication. The operation display displays removal specifying information for identifying the removal and accepts entering a password candidate. The authentication unit performs authentication when the entered password candidate matches the password for temporary authentication and does not perform authentication when the password does not match the password for temporary authentication. According to the present invention, the operation display is configured to remove a character randomly selected as a part of the registered password for authentication and configured to display the removed character and is configured not to display the position of the removed character.

These as well as other aspects, advantages, and alternatives will become apparent to those of ordinary skill in the art by reading the following detailed description with reference where appropriate to the accompanying drawings. Further, it should be understood that the description provided in this summary section and elsewhere in this document is intended to illustrate the claimed subject matter by way of example and not by way of limitation.

### BRIEF DESCRIPTION OF THE DRAWINGS

FIG. 1 illustrates a block diagram illustrating a functional configuration of an image forming apparatus;
FIG. 2 illustrates contents of an authentication process;
FIGS. 3A and 3B illustrate explanatory diagrams illustrating login screens; and
FIG. 4 illustrates contents of a password entering process.

### DETAILED DESCRIPTION

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

The following describes a configuration for implementing the disclosure (hereinafter referred to as "embodiment") with reference to the drawings.

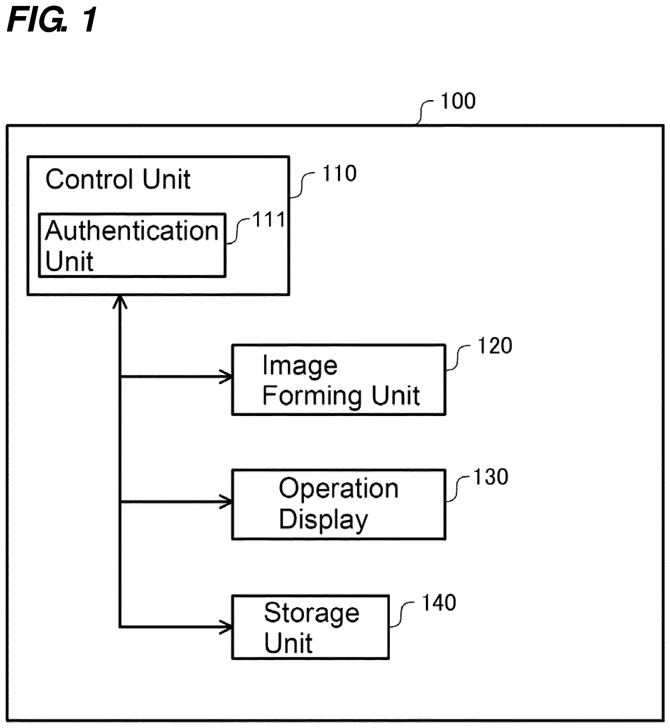

FIG. 1 illustrates a block diagram illustrating a functional configuration of an image forming apparatus 100 embodying an authentication device. The image forming apparatus 100 includes a control unit 110, an image forming unit 120, an operation display 130, and a storage unit 140. The image forming unit 120 reads an image from an original document to generate image data, so as to perform printing on a print medium based on the processed image data. The operation display 130 functions as a touch panel to accept an input of a password by a user. The control unit 110 includes an authentication unit 111 that performs a user authentication using a password. The control unit 110 releases a use restriction of the image forming apparatus 100 in response to the user authentication. The use restriction is, for example, a restriction on a function that is permitted to only the authenticated user.

The control unit 110 includes a main storage unit, such as a RAM and a ROM, and a control unit, such as a Micro Processing Unit (MPU) and a Central Processing Unit (CPU). The control unit 110 has a controller function related to an interface, such as various I/Os, a Universal Serial Bus (USB), a bus, and another hardware, and controls the whole image forming apparatus 100.

The storage unit 140 is a storage device constituted of a hard disk drive, a flash memory, or a similar medium, which are non-transitory recording media, and stores control programs and data for processes performed by the control unit 110. The storage unit 140 further stores a registered password for authentication associated with a user name.

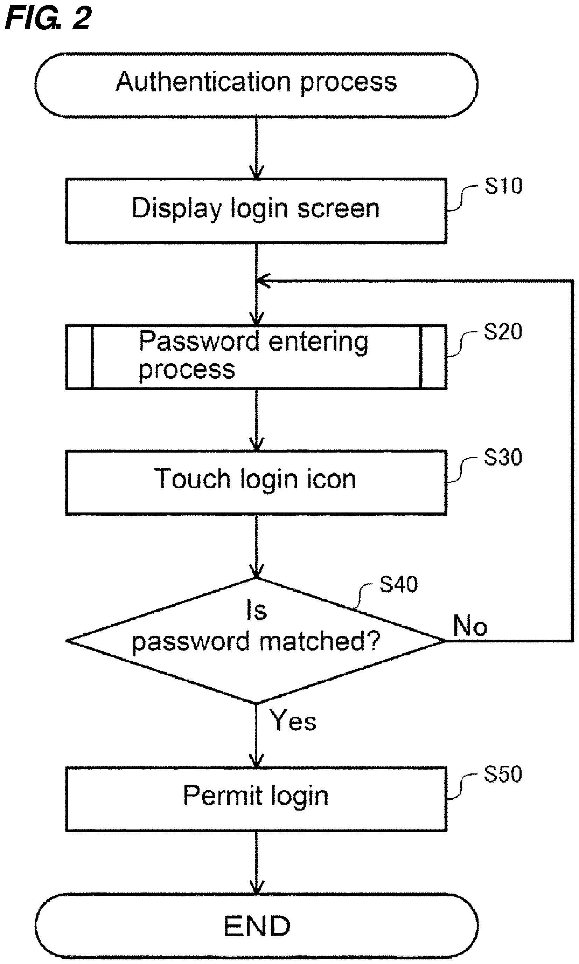

FIG. 2 illustrates contents of an authentication process. At Step S10, the user touches, for example, the operation display 130 of the image forming apparatus 100, which is in a non-login state. The control unit 110 displays a login screen 131 in response to the touch on the operation display 130.

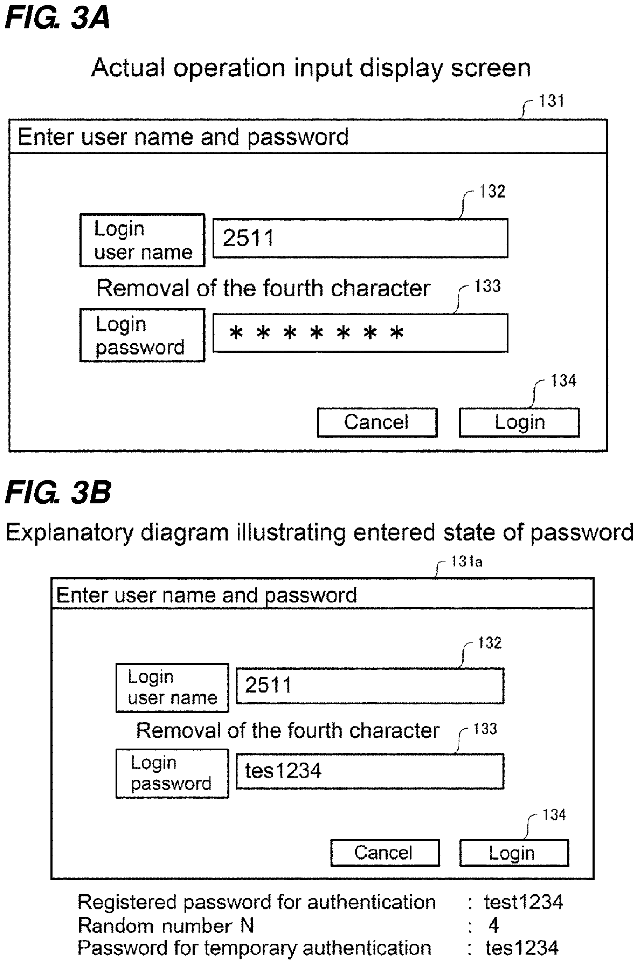

FIGS. 3A and 3B illustrate explanatory diagrams illustrating the login screens 131 and 131a. The login screen 131 includes a user name field 132 for entering a login user name, a password field 133 for entering a password, which is constituted as a character string, and a login icon 134. In the user name field 132, an employee number "2511" is entered as the user name.

FIG. 3A illustrates an operation input display screen, which is actually displayed, and FIG. 3B illustrates the login screen 131a as an explanatory diagram illustrating an entered state of a password. The login screen 131 according to the embodiment equally displays an entered state of respective characters of an entered password with predetermined symbols (symbols of "*") such that the entered characters are not identified by a third person. This ensures the reduction of the case where the third person peeks it to know the password.

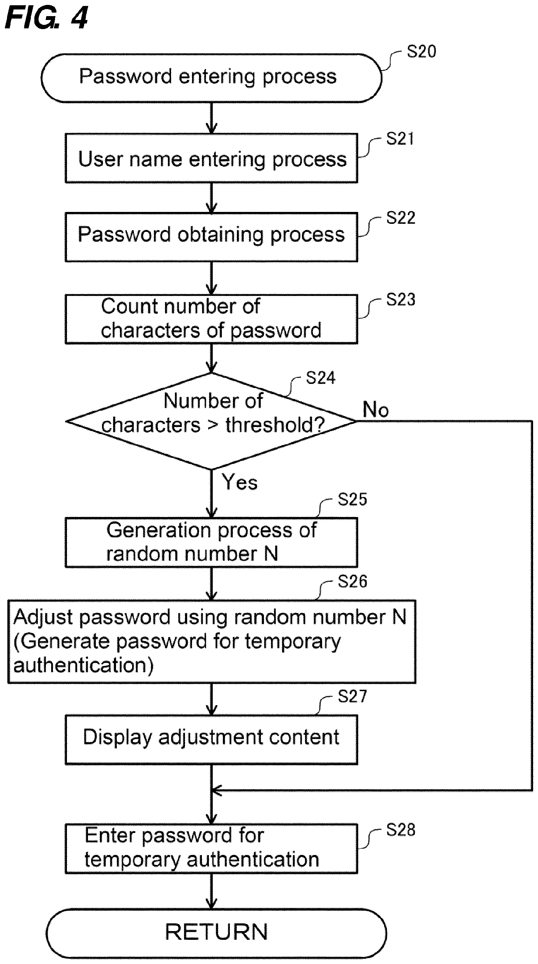

FIG. 4 illustrates contents of a password entering process. At Step S20, the user performs the password entering process. At Step S21, the user performs a user name entering process. In the user name entering process, the user enters the own employee number "2511" into the user name field 132. As the input method, an on-screen keyboard (not illustrated) displayed on the operation display 130, which functions as a touch panel, may be used, and a keyboard (not illustrated), which the image forming apparatus 100 additionally includes, may be used.

At Step S22, the authentication unit 111 performs a password obtaining process. The authentication unit 111 reads the registered password for authentication, which is preliminarily associated for each user to be registered in the storage unit 140, from the storage unit 140 so as to obtain it. In this example, assume that the registered password for authentication is "test1234." At Step S23, the authentication unit 111 counts the number of characters of the registered password for authentication. In this example, it is counted as eight characters of "test1234."

At Step S24, the authentication unit 111 compares the number of characters of the registered password for authentication with a threshold (which is set to two characters in this example). This is because when the number of characters of the registered password for authentication is excessively small, its use environment is assumed where the third person is not assumed to steal the password.

When the number of characters of the registered password for authentication (eight in this example) is larger than the threshold (two in this example), the authentication unit 111 advances the process to Step S25. On the other hand, when the number of characters of the registered password for authentication is equal to or less than the threshold, the authentication unit 111 advances the process to Step S28 by skipping the processes of Steps S25 to S27.

At Step S25, the authentication unit 111 generates a random number N that is in a range of the number of characters of the registered password for authentication (a range of 1 to 8). In this example, assume that the authentication unit 111 generates "4" as the random number N.

At Step S26, the authentication unit 111 adjusts the password using the random number N to generate a password for temporary authentication. This enables the authentication unit 111 to generate "tes1234" as the password for temporary authentication. The password for temporary authentication is generated by removing the fourth character as the random number N from "test1234" as the registered password for authentication.

At Step S27, the authentication unit 111 displays an adjustment content of the password. Specifically, the authentication unit 111 displays a text of "removal of the fourth character," which indicates that the fourth character has been removed, on the operation display 130. This text is also referred to as "removal specifying information."

At Step S28, the user estimates "tes1234" as the password for temporary authentication from "test1234" as the registered password for authentication in accordance with the display of "removal of the fourth character." The user enters the estimated "tes1234" into the password field 133 of the login screen 131.

At Step S30 (see FIG. 2), the user touches the login icon 134 in response to a completion of entering the password. At Step S40, the authentication unit 111 determines whether the entered password (also referred to as a password candidate) matches the password for temporary authentication or not. When both the sides match, the process proceeds to Step S50, and the login of the user whose employee number is "2511" is permitted. Meanwhile, when both the sides do not match, the authentication is rejected (that is, the authentication is not performed), and the process returns to Step S20.

At Step S50, after the authentication based on the match between the entered password and the password for temporary authentication, the authentication unit 111 permits the login to perform a login process.

Thus, in the image forming apparatus 100, the authentication can be performed by entering only a part of the password. In view of this, the third person cannot know the whole password even when peeking an operation input of the user. This ensures the reduction of obtaining the whole password by the third person who peeks an operation input of the user while the user enters the password on the keyboard (not illustrated).

In addition to the above-described respective examples, the following modifications implement the disclosure.

### Modification 1

In the above-described example, the random number N is generated in the range of the number of characters of the registered password for authentication, and the character located at the position determined based on the random number N is removed. That is, for example, when "4" is generated as the random number N, "tes1234," where the fourth character is removed from "test1234," is generated as the password for temporary authentication.

However, a method of removing a character when the password for temporary authentication is generated from the registered password for authentication is not limited to such method. For example, the character located at the position determined based on the random number N, and a character identical to this character may be removed to generate "es1234." This means that, according to the present invention, the third person cannot know even the removed position of character.

### Modification 2

While in the above-described example the random number N is generated in the range of the number of characters of the registered password for authentication, the selection method is not limited insofar as a character is randomly selected from the characters of the registered password for authentication using some sort of method.

### Modification 3

While in the above-described example the removal specifying information is a text indicative of a position of a character to be removed, for example, may be a character "t." This ensures the reduced load of the user who enters a password. On the other hand, the third person cannot obtain the password because according to the invention the position of the removed character is unknown.

### Modification 4

While in the above-described the disclosure is embodied as the image forming apparatus, the disclosure is applicable to an authentication device available in, for example, a portable terminal, a tablet, and other electronic devices that may store personal information and similar information. In this case, for example, the portable terminal and the tablet are restricted to use a predetermined function, and the portable terminal and the tablet include a functional unit that releases the use restriction of the predetermined function in response to authentication by this authentication device.

While various aspects and embodiments have been disclosed herein, other aspects and embodiments will be apparent to those skilled in the art. The various aspects and embodiments disclosed herein are for purposes of illustration and are not intended to be limiting, with the scope of the invention being defined by the appended claims.

## Claims

1. An authentication device comprising:
a storage unit (140) that stores a registered password for authentication associated with a user name;
an operation display (130) that generates a password for temporary authentication in response to entering the user name, the password for temporary authentication being generated by removing a part of the registered password for authentication, the operation display displaying removal specifying information for identifying the removal, and accepting entering a password candidate; and
an authentication unit (111) that performs authentication when the entered password candidate matches the password for temporary authentication and does not perform authentication when the password does not match the password for temporary authentication;
**characterized in that**
the operation display (130) is configured to remove a character randomly selected as a part of the registered password for authentication and configured to display the removed character and is configured not to display the position of the removed character.

2. The authentication device according to claim 1,
wherein the operation display (130) removes a part of the registered password for authentication when a count of characters of the registered password for authentication is larger than a preliminarily set count of characters.

3. An electronic device comprising:
the authentication device according to claim 1; and
a functional unit that restricts a predetermined function and releases a use restriction of the predetermined function in response to the authentication by the authentication device.

4. An authentication method comprising:
storing a registered password for authentication associated with a user name;
generating a password for temporary authentication that is generated by removing a part of the registered password for authentication in response to entering the user name, displaying removal specifying information for identifying the removal, and accepting entering a password candidate; and
authenticating when the entered password candidate matches the password for temporary authentication and not authenticating when the password does not match the password for temporary authentication;
**characterized by**
removing a character randomly selected as a part of the registered password for authentication and displaying the removed character, wherein the position of the removed character is not displayed.

5. A non-transitory computer-readable recording medium storing an authentication program that controls an authentication device, the authentication program causing the authentication device to function as:
a storage unit (140) storing a registered password for authentication associated with a user name;
an operation display (130) that generates a password for temporary authentication in response to entering the user name, the password for temporary authentication being generated by removing a part of the registered password for authentication, the operation display displaying removal specifying information for identifying the removal and accepting entering a password candidate; and
an authentication unit (111) that performs authentication when the entered password candidate matches the password for temporary authentication and does not perform authentication when the password does not match the password for temporary authentication;
**characterized in that**
the operation display (130) is configured to remove a character randomly selected as a part of the registered password for authentication and is configured to display the removed character and is configured not to display the position of the removed character.

## Patentansprüche

1. Authentifizierungsvorrichtung, umfassend:
eine Speichereinheit (140), welche ein registriertes Passwort für Authentifizierung in Zusammenhang mit einem Benutzernamen speichert;
eine Betriebsanzeige (130), welche ein Passwort für temporäre Authentifizierung erzeugt in Antwort auf das Eingeben des Benutzernamens, wobei das Passwort für temporäre Authentifizierung durch Entfernen eines Teils des registrierten Passworts für Authentifizierung erzeugt wird, die Betriebsanzeige spezifizierende Entfernungsinformationen zum Identifizieren des Entfernens anzeigt und das Eingeben eines potentiellen Passworts erlaubt; und
eine Authentifizierungseinheit (111), welche Authentifizierung durchführt, wenn das eingegebene potentielle Passwort dem Passwort für temporäre Authentifizierung entspricht, und Authentifizierung nicht durchführt, wenn das Passwort nicht dem Passwort für temporäre Authentifizierung entspricht;
**dadurch gekennzeichnet, dass**
die Betriebsanzeige (130) konfiguriert ist, ein Zeichen, zufällig ausgewählt als ein Teil des registrierten Passworts für Authentifizierung, zu entfernen, und konfiguriert ist, das entfernte Zeichen anzuzeigen, und konfiguriert ist, die Position des entfernten Zeichens nicht anzuzeigen.

2. Authentifizierungsvorrichtung gemäß Anspruch 1,
wobei die Betriebsanzeige (130) einen Teil des registrierten Passworts für Authentifizierung entfernt, wenn eine Anzahl von Zeichen des registrierten Passworts für Authentifizierung größer ist als eine vorher festgelegte Anzahl von Zeichen.

3. Elektronische Vorrichtung, umfassend:
die Authentifizierungsvorrichtung gemäß Anspruch 1; und
eine funktionelle Einheit, die eine vorher bestimmte Funktion einschränkt und eine Benutzereinschränkung der vorher bestimmten Funktion in Antwort auf die Authentifizierung durch die Authentifizierungsvorrichtung aufhebt.

4. Authentifizierungsverfahren, umfassend:
Speichern eines registrierten Passworts für Authentifizierung in Zusammenhang mit einem Benutzernamen;
Erzeugen eines Passworts für temporäre Authentifizierung, welches durch Entfernen eines Teils des registrierten Passworts für Authentifizierung erzeugt wird, in Antwort auf das Eingeben des Benutzernamens, Anzeigen von spezifizierenden Entfernungsinformationen zum Identifizieren des Entfernens, und Erlauben des Eingebens eines potentiellen Passworts; und
Authentifizieren, wenn das eingegebene potentielle Passwort dem Passwort für temporäre Authentifizierung entspricht, und nicht Authentifizieren, wenn das Passwort nicht dem Passwort für temporäre Authentifizierung entspricht;
**gekennzeichnet durch**
Entfernen eines Zeichens, zufällig ausgewählt als ein Teil des registrierten Passworts für Authentifizierung, und Anzeigen des entfernten Zeichens, wobei die Position des entfernten Zeichens nicht angezeigt wird.

5. Nicht-transitorisches computerlesbares Aufzeichnungsmedium, das ein Authentifizierungsprogramm speichert, welches eine Authentifizierungsvorrichtung steuert, wobei das Authentifizierungsprogramm verursacht, dass die Authentifizierungsvorrichtung fungiert als:
eine Speichereinheit (140), welche ein registriertes Passwort für Authentifizierung in Zusammenhang mit einem Benutzernamen speichert;
eine Betriebsanzeige (130), welche ein Passwort für temporäre Authentifizierung erzeugt in Antwort auf das Eingeben des Benutzernamens, wobei das Passwort für temporäre Authentifizierung durch Entfernen eines Teils des registrierten Passworts für Authentifizierung erzeugt wird, die Betriebsanzeige spezifizierende Entfernungsinformationen zum Identifizieren des Entfernens anzeigt und das Eingeben eines potentiellen Passworts erlaubt; und
eine Authentifizierungseinheit (111), welche Authentifizierung durchführt, wenn das eingegebene potentielle Passwort dem Passwort für temporäre Authentifizierung entspricht, und Authentifizierung nicht durchführt, wenn das Passwort nicht dem Passwort für temporäre Authentifizierung entspricht;
**dadurch gekennzeichnet, dass**
die Betriebsanzeige (130) konfiguriert ist, ein Zeichen, zufällig ausgewählt als ein Teil des registrierten Passworts für Authentifizierung, zu entfernen, und konfiguriert ist, das entfernte Zeichen anzuzeigen, und konfiguriert ist, die Position des entfernten Zeichens nicht anzuzeigen.

## Revendications

1. Dispositif d'authentification comprenant :
une unité de stockage (140) qui stocke un mot de passe enregistré pour l'authentification associé à un nom d'utilisateur ;
un affichage d'opération (130) qui génère un mot de passe pour l'authentification temporaire en réponse à une entrée du nom d'utilisateur, le mot de passe pour l'authentification temporaire étant généré par la suppression d'une partie du mot de passe enregistré pour l'authentification, l'affichage d'opération affichant la suppression spécifiant des informations pour identifier la suppression et accepter l'entrée d'un mot de passe candidat ; et
une unité d'authentification (111) qui réalise l'authentification lorsque le mot de passe candidat saisi correspond au mot de passe pour l'authentification temporaire et ne réalise pas l'authentification lorsque le mot de passe ne correspond pas au mot de passe pour l'authentification temporaire ;
**caractérisé en ce que**
l'affichage d'opération (130) est configuré pour supprimer un caractère choisi au hasard en tant que partie du mot de passe enregistré pour l'authentification et configuré pour afficher le caractère supprimé, et est configuré pour ne pas afficher la position du caractère supprimé.

2. Dispositif d'authentification selon la revendication 1,
l'affichage d'opération (130) supprimant une partie du mot de passe enregistré pour l'authentification lorsqu'un nombre de caractères du mot de passe enregistré pour l'authentification est supérieur à un nombre prédéfini de caractères.

3. Dispositif électronique comprenant :
le dispositif d'authentification selon la revendication 1 ; et
une unité fonctionnelle qui restreint une fonction prédéterminée et libère une restriction d'utilisation de la fonction prédéterminée en réponse à l'authentification par le dispositif d'authentification.

4. Procédé d'authentification comprenant :
le stockage d'un mot de passe enregistré pour l'authentification associé à un nom d'utilisateur ;
la génération d'un mot de passe pour l'authentification temporaire qui est généré par la suppression d'une partie du mot de passe enregistré pour l'authentification en réponse à la saisie du nom d'utilisateur, l'affichage de la suppression spécifiant des informations pour identifier la suppression et accepter l'entrée d'un mot de passe candidat ; et
l'authentification lorsque mot de passe candidat saisi correspond au mot de passe pour l'authentification temporaire et la non authentification lorsque le mot de passe ne correspond pas au mot de passe pour l'authentification temporaire ;
**caractérisé par** :
la suppression d'un caractère choisi au hasard en tant que partie du mot de passe enregistré pour l'authentification et l'affichage du caractère supprimé, la position du caractère supprimé n'étant pas affichée.

5. Support d'enregistrement non transitoire lisible par ordinateur stockant un programme d'authentification qui commande un dispositif d'authentification, le programme d'authentification amenant le dispositif d'authentification à fonctionner comme :
une unité de stockage (140) stockant un mot de passe enregistré pour l'authentification associé à un nom d'utilisateur ;
un affichage d'opération (130) qui génère un mot de passe pour l'authentification temporaire en réponse à la saisie du nom d'utilisateur, le mot de passe pour l'authentification temporaire étant généré par la suppression d'une partie du mot de passe enregistré pour l'authentification, l'affichage d'opération affichant la suppression spécifiant des informations pour identifier la suppression et accepter la saisie d'un mot de passe candidat ; et
une unité d'authentification (111) qui réalise l'authentification lorsque le mot de passe candidat saisi correspond au mot de passe pour l'authentification temporaire et ne réalise pas l'authentification lorsque le mot de passe ne correspond pas au mot de passe pour l'authentification temporaire ;
**caractérisé en ce que**
l'affichage d'opération (130) est configuré pour supprimer un caractère choisi au hasard en tant que partie du mot de passe enregistré pour l'authentification et est configuré pour afficher le caractère supprimé, et est configuré pour ne pas afficher la position du caractère supprimé.
